# EUROPEAN PATENT APPLICATION

(11) **EP 3 125 150 A1**
(43) Date of publication of application: **01.02.2017**
(21) Application number: 16163019.9
(22) Date of filing: 30.03.2016
(51) Int. Cl.: G06K 9/00

(54) **ABNORMAL VIDEO INFORMATION REMINDING METHOD AND APPARATUS, COMPUTER PROGRAM AND RECORDING MEDIUM**

(30) Priority: 31.07.2015 CN 201510461520
(71) Applicant: Xiaomi Inc., Beijing 100085 (CN)
(72) Inventor: XIE, Yan, 100085 BEIJING (CN); REN, Tian, 100085 BEIJING (CN); CHENG, Yue, 100085 BEIJING (CN); WANG, Da, 100085 BEIJING (CN)
(74) Representative: Cougard, Jean-Marie

(57) **Abstract**

The present disclosure is related to an abnormal video information reminding method and apparatus, a corresponding computer program and recording medium. The method comprises: acquiring (S201) video information; determining (S202) if the video information contains abnormal human face information or dangerous object information; and if the video information contains abnormal human face information or dangerous object information, outputting (S203) reminding information indicating the abnormal video information. By using the above method, when suspected people or dangerous objects appear in a video screen, a reminder for abnormal information can be provided to a user, so that the user can know the abnormal information in time.

## Description

### TECHNICAL FIELD

The present disclosure is related to the field of computer technology, and more particularly, to an abnormal video information reminding method and apparatus, a computer program and a recording medium.

### BACKGROUND

More and more imaging devices (such as cameras and video recorders) are provided with communication modules for connecting to networks. Then, user terminals can establish communication connections with the imaging devices through networks, and acquire video information captured by the imaging devices at remote locations, thereby bringing convenience to users.

### SUMMARY

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

To overcome the problems of the related arts, the present disclosure provides an abnormal video information reminding method and apparatus, a computer program and a recording medium.

According to a first aspect of the embodiments of the present disclosure, there is provided an abnormal video information reminding method, comprising: acquiring video information; determining if the video information contains abnormal human face information or dangerous object information; and if the video information contains abnormal human face information or dangerous object information, outputting reminding information indicating the abnormal video information.

In a particular embodiment, the abnormal video information reminding method is implemented by (or applied in) a terminal or a device.

In some possible embodiments of the first aspect, the video information is captured by an imaging device in real time.

In some possible embodiments of the first aspect, determining if the video information contains abnormal human face information or dangerous object information comprises: extracting abnormal object feature information from the video information; determining if the extracted abnormal object feature information is human face feature information; if the extracted abnormal object feature information is human face feature information, determining if the extracted abnormal object feature information matches with preset human face information, wherein the preset human face information represents a safe human face; if the extracted abnormal object feature information matches with the preset human face information, determining that the video information does not contain abnormal human face information; if the extracted abnormal object feature information does not match with the preset human face information, determining that the video information contains abnormal human face information; if the extracted abnormal object feature information is not human face feature information, determining if the extracted abnormal object feature information matches with preset dangerous object information; if the extracted abnormal object feature information does not match with the preset dangerous object information, determining that the video information does not contain dangerous object information; if the extracted abnormal object feature information matches with the preset dangerous object information, determining that the video information contains dangerous object information.

In some possible embodiments of the first aspect, determining if the video information contains abnormal human face information or dangerous object information comprises: extracting abnormal object feature information from the video information; determining if the extracted abnormal object feature information is human face feature information; if the extracted abnormal object feature information is human face feature information, determining if the extracted abnormal object feature information matches with preset human face information, wherein the preset human face information represents a dangerous human face; if the extracted abnormal object feature information does not match with the preset human face information, determining that the video information does not contain abnormal human face information; if the extracted abnormal object feature information matches with the preset human face information, determining that the video information contains abnormal human face information; if the extracted abnormal object feature information is not human face feature information, determining if the extracted abnormal object feature information matches with preset dangerous object information; if the extracted abnormal object feature information does not match with the preset dangerous object information, determining that the video information does not contain dangerous object information; if the extracted abnormal object feature information matches with the preset dangerous object information, determining that the video information contains dangerous object information.

In some possible embodiments of the first aspect, determining if the video information contains abnormal human face information or dangerous object information comprises: extracting abnormal object feature information from the video information in a preset time period; determining if the extracted abnormal object feature information is human face feature information; if the extracted abnormal object feature information is human face feature information, determining if the video information contains abnormal human face information; if the extracted abnormal object feature information is not human face feature information, determining if the extracted abnormal object feature information matches with preset dangerous object information; if the extracted abnormal object feature information does not match with the preset dangerous object information, determining that the video information does not contain abnormal human face information and dangerous object information; if the extracted abnormal object feature information matches with the preset dangerous object information, determining that the video information contains dangerous object information.

In some possible embodiments of the first aspect, the preset human face information or the preset dangerous object information is acquired from images captured by a capturing device, or the preset human face information or the preset dangerous object information is acquired from images of an image library.

In some possible embodiments of the first aspect, outputting reminding information comprises: displaying the abnormal human face information or dangerous object information contained in the video information.

According to a second aspect of the embodiments of the present disclosure, there is provided an abnormal video information reminding method, wherein the method is applied in a device such as a user device and comprises: receiving reminding information; reminding according to the reminding information, wherein the reminding information is acquired by the following method comprising: acquiring video information; determining if the video information contains abnormal human face information or dangerous object information; and if the video information contains abnormal human face information or dangerous object information, outputting reminding information indicating the abnormal video information.

According to a third aspect of the embodiments of the present disclosure, there is provided an abnormal video information reminding apparatus, comprising: an acquiring module configured to acquire video information; a determining module configured to determine if the video information contains abnormal human face information or dangerous object information; and an outputting module configured to output reminding information indicating abnormal video information, if the video information contains abnormal human face information or dangerous object information.

In some possible embodiments of the third aspect, the video information is captured by an imaging device in real time.

In some possible embodiments of the third aspect, the determining module comprises: a first extracting sub-module configured to extract abnormal object feature information from the video information; a first determining sub-module configured to determine if the extracted abnormal object feature information is human face feature information; a second determining sub-module configured to determine if the extracted abnormal object feature information matches with preset human face information when the extracted abnormal object feature information is human face feature information, wherein the preset human face information represents a safe human face; a first abnormal human face information determining sub-module configured to determine that the video information does not contain abnormal human face information if the extracted abnormal object feature information matches with the preset human face information; a second abnormal human face information determining sub-module configured to determine that the video information contains abnormal human face information, if the extracted abnormal object feature information does not match with the preset human face information; a third determining sub-module configured to determine if the extracted abnormal object feature information matches with preset dangerous object information when the extracted abnormal object feature information is not human face feature information; a first dangerous object information determining sub-module configured to determine that the video information does not contain dangerous object information if the extracted abnormal object feature information does not match with the preset dangerous object information; a second dangerous object information determining sub-module configured to determine that the video information contains dangerous object information when the extracted abnormal object feature information matches with the preset dangerous object information.

In some possible embodiments of the third aspect, the determining module comprises: a second extracting sub-module configured to extract abnormal object feature information from the video information; a fourth determining sub-module configured to determine if the extracted abnormal object feature information is human face feature information; a fifth determining sub-module configured to determine if the extracted abnormal object feature information matches with preset human face information when the extracted abnormal object feature information is human face feature information, wherein the preset human face information represents a dangerous human face; a third abnormal human face information determining sub-module configured to determine that the video information does not contain abnormal human face information if the extracted abnormal object feature information does not match with the preset human face information; a fourth abnormal human face information determining sub-module configured to determine that the video information contains abnormal human face information if the extracted abnormal object feature information matches with the preset human face information; a sixth determining sub-module configured to determine if the extracted abnormal object feature information matches with preset dangerous object information when the extracted abnormal object feature information is not human face feature information; a third dangerous object information determining sub-module configured to determine that the video information does not contain dangerous object information if the extracted abnormal object feature information does not match with the preset dangerous object information; a fourth dangerous object information determining sub-module configured to determine that the video information contains dangerous object information if the extracted abnormal object feature information matches with the preset dangerous object information.

In some possible embodiments of the third aspect, the determining module comprises: a third extracting sub-module configured to extract abnormal object feature information from the video information in a preset time period; a seventh determining sub-module configured to determine if the extracted abnormal object feature information is human face feature information; a fifth abnormal human face information determining sub-module configured to determine if the video information contains abnormal human face information, when the extracted abnormal object feature information is human face feature information; an eighth determining sub-module configured to determine if the extracted abnormal object feature information matches with preset dangerous object information, when the extracted abnormal object feature information is not human face feature information; a fifth dangerous object information determining sub-module configured to determine that the video information does not contain abnormal human face information and dangerous object information if the extracted abnormal object feature information does not match with the preset dangerous object information; a sixth dangerous object information determining sub-module configured to determine that the video information contains dangerous object information if the extracted abnormal object feature information matches with the preset dangerous object information.

In some possible embodiments of the third aspect, the determining module is configured to acquire the preset human face information or the preset dangerous object information from images captured by a capturing device, or the determining module is configured to acquire the preset human face information or the preset dangerous object information from images of an image library.

In some possible embodiments of the third aspect, the outputting module comprises: a displaying sub-module configured to display the abnormal human face information or dangerous object information contained in the video information.

According to a fourth aspect of the embodiments of the present disclosure, there is provided an abnormal video information reminding apparatus, comprising: a processor; and a memory storing instructions executable by the processor, wherein the processor is configured to: acquire video information; determine if the video information contains abnormal human face information or dangerous object information; and if the video information contains abnormal human face information or dangerous object information, output reminding information indicating the abnormal video information.

In one particular embodiment, the steps of the abnormal video information reminding method are determined by computer program instructions.

Consequently, according to a fifth aspect, the invention is also directed to a computer program for executing the steps of an abnormal video information reminding method as defined above when this program is executed by a computer.

This program can use any programming language and take the form of source code, object code or a code intermediate between source code and object code, such as a partially compiled form, or any other desirable form.

The invention is also directed to a computer-readable information medium containing instructions of a computer program as defined above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

The technical solution of the embodiments of this disclosure have the following advantageous effects:
By using the method comprising the steps of: acquiring video information; determining if the video information contains abnormal human face information or dangerous object information; and if the video information contains abnormal human face information or dangerous object information, outputting reminding information indicating the abnormal video information, the following effect can be realized: when suspected people or dangerous objects appear in a video screen, a reminder for (or a notification of) abnormal information can be provided to a user, so that the user can know the abnormal information in time.

It should be understood that both the foregoing general description and the following detailed description are exemplary and explanatory only and are not restrictive of the invention.

### BRIEF DESCRIPTION OF THE DRAWINGS

The accompanying drawings, incorporated in and constitute a part of this specification, illustrate embodiments consistent with the invention and, together with the description, serve to explain the principles of the invention.
Fig. 1A is a schematic drawing showing an application environment according to one exemplary embodiment;
Fig. 1B is a schematic drawing showing an application environment according to another exemplary embodiment;
Fig. 2 is a flow chart showing an abnormal video information reminding method according to an exemplary embodiment;
Fig. 3 is a flow chart showing an abnormal video information reminding method according to another exemplary embodiment;
Figs. 4A-4C are schematic drawings showing an application scene of the abnormal video information reminding method shown in Fig. 3;
Figs. 5A-5C are schematic drawings showing another application scene of the abnormal video information reminding method shown in Fig. 3;
Fig. 6 is a flow chart showing an abnormal video information reminding method according to another exemplary embodiment;
Figs. 7A-7C are schematic drawings showing an application scene of the abnormal video information reminding method shown in Fig. 6;
Fig. 8 is a flow chart showing an abnormal video information reminding method according to another exemplary embodiment;
Fig. 9 is a flow chart showing an abnormal video information reminding method according to another exemplary embodiment;
Fig. 10 is a flow chart showing an abnormal video information reminding method according to another exemplary embodiment;
Fig. 11 is a block diagram of an abnormal video information reminding apparatus according to an exemplary embodiment;
Fig. 12 is a block diagram of an abnormal video information reminding apparatus according to another exemplary embodiment;
Fig. 13 is a block diagram of an abnormal video information reminding apparatus according to another exemplary embodiment;
Fig. 14 is a block diagram of an abnormal video information reminding apparatus according to another exemplary embodiment;
Fig. 15 is a block diagram of an abnormal video information reminding apparatus according to another exemplary embodiment; and
Fig. 16 is a block diagram of an abnormal video information reminding apparatus according to another exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise presented. The embodiments set forth in the following description of exemplary embodiments do not represent all embodiments consistent with the invention. Instead, they are merely examples of apparatuses and methods consistent with aspects related to the invention as recited in the appended claims.

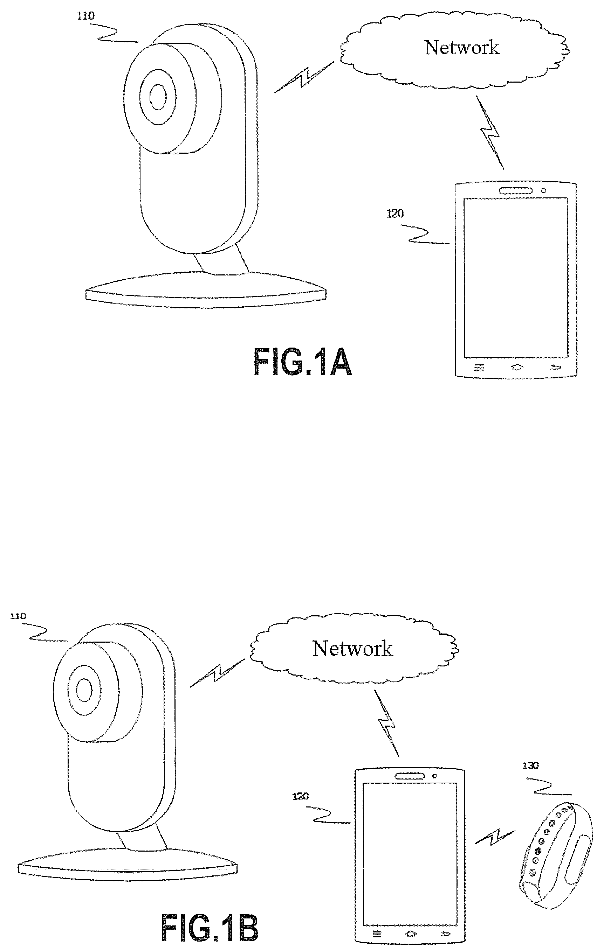

Fig. 1A is a schematic drawing showing an application environment according to one exemplary embodiment. As shown in Fig. 1A, the application environment may comprise an imaging device 110 and a user terminal 120. The imaging device 110 may be connected to and communicate with the user terminal 120 via a network including but not limited to WiFi (Wireless Fidelity), 2G, 3G and 4G networks.

The imaging device 110 may be a smart video recorder or a smart camera having storage and processing functions, or may include a camera and a sever connected to the camera for storing and processing video information captured by the camera. Fig. 1A is illustrated with the imaging device 110 being embodied as a smart camera.

The user terminal 120 may be a smart cellphone, a tablet computer, a PC or a notebook computer or the like, and can acquire video information captured by the imaging device 110 through a network to realize remote video monitoring. Fig. 1A is illustrated with the user terminal 120 being embodied as a smart cellphone.

Fig. 1B is a schematic drawing showing an application environment according to another exemplary embodiment. As shown in Fig. 1B, the application environment may comprise an imaging device 110, a user terminal 120 and a wearable device 130.

The imaging device 110 may be connected to and communicate with the user terminal 120 via a network including but not limited to WiFi (Wireless Fidelity), 2G, 3G and 4G networks.

The imaging device 110 may be a smart video recorder or a smart camera having storage and processing functions, or may include a camera and a sever connected to the camera for storing and processing video information captured by the camera. Fig. 1B is illustrated with the imaging device 110 being embodied as a smart camera.

The user terminal 120 may be a smart cellphone, a tablet computer, a PC or a notebook computer or the like, and can acquire video information captured by the imaging device 110 through a network to realize remote video monitoring. Fig. 1B is illustrated with the user terminal 120 being embodied as a smart cellphone.

The wearable device 130 may be a smart bracelet, a smart watch, a smart ring, smart gloves, smart clothes or the like, and may communicate with the user terminal 120. A binding relation may be established in advance between the wearable device 130 and the user terminal 120. The user terminal 120 may be linked to the wearable device 130 using wired or wireless communication technologies, such as Bluetooth, WiFi, or ZigBee. To reduce the power consumption of the wearable device 130 and the user terminal 120, optionally, the wearable device 130 and the user terminal 120 may be connected by low-power consumption Bluetooth technology. Fig. 1B is illustrated with the wearable device 130 being embodied as a smart bracelet.

Although Fig. 1B shows that the wearable device 130 can communicate with the user terminal 120, yet in other possible embodiments, the wearable device 130 may directly communicate with the imaging device 110 to acquire, store and process video information captured by the imaging device 110.

In this disclosure, both the wearable device 130 and the user terminal 120 may be called as "user devices".

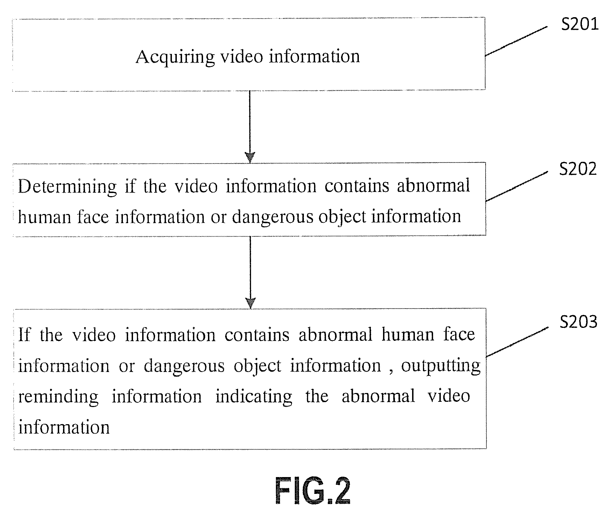

Fig. 2 is a flow chart showing an abnormal video information reminding method according to an exemplary embodiment. As shown in Fig. 2, the method, implemented by a terminal or device, may comprise the following steps:
Step S201: acquiring video information.
   In this disclosure, video information may be captured by the imaging device 110 shown in Figs. 1A and 1B. The method may be applied in (or implemented by) by a device or terminal, such as at least one of an imaging device (such as the imaging device 110 shown in Figs. 1A-1B), a user terminal (such as the user terminal 120 shown in Figs. 1A-1B) and a wearable device (such as the wearable device 130 shown in Fig. 1B). When this method is applied in the user terminal, the user terminal may acquire the video information from the imaging device that captures the video information. When this method is applied in the wearable device, the wearable device may directly acquire the video information from the imaging device that captures the video information, or acquire the video information from the imaging device that captures the video information via a user terminal connected to the wearable device.
Step S202: determining if the video information contains abnormal human face information or dangerous object information. In this disclosure, abnormal human face information may represent user-defined abnormal human face information, and may include any human face information or dangerous human face information. Dangerous object information may represent user-defined dangerous object information, the dangerous object including but not limited to at least one of a gun, ammunition, a dagger, naked fire and the like.
   In a particular example, abnormal human face information is information representative of predefined human face (which, in this case, is considered as an abnormal or dangerous human face).
   In a particular example, dangerous object information is information representative of a predefined object (which, in this case, is considered as a dangerous object).
Step S203: if the video information contains abnormal human face information or dangerous object information, outputting reminding information (which may also be called notifying information) indicating the abnormal video information.

As mentioned above, the method can be applied in at least one of an imaging device, a user terminal and a wearable device. Thus, reminding information can be output by the imaging device, user terminal or wearable device itself to remind (or notify) the abnormal video information.

To sum up, by using the method comprising: acquiring video information; determining if the video information contains abnormal human face information or dangerous object information; and if the video information contains abnormal human face information or dangerous object information, outputting reminding information indicating the abnormal video information, when abnormal people or dangerous objects appear in a video screen, a reminder for (or a notification of) abnormal information can be provided to a user, so that the user can know the abnormal information in time.

In a particular embodiment, when the method is applied in an imaging device, if the video information contains abnormal human face information or dangerous object information, outputting reminding information (step S203) may comprise: if the video information contains abnormal human face information or dangerous object information, outputting reminding information to the user terminal or the wearable device. Thus, outputting reminding information indicating abnormal video information through a user terminal or a wearable device can be realized, so that the user can remotely monitor abnormal video.

In a particular embodiment, when the method is applied in a user terminal, if the video information contains abnormal human face information or dangerous object information, outputting reminding information (step S203) may comprise: if the video information contains abnormal human face information or dangerous object information, outputting reminding information to the wearable device. Thus, outputting reminding information indicating abnormal video information through a wearable device worn by a user can be realized, so that the user can promptly acquire a reminder of abnormal video when not carrying a user terminal.

In this disclosure, the video information may be captured by an imaging device (such as the imaging device 110 shown in Figs. 1A-1B) in real time. Thus, in step S201, the video information may be acquired in real time. Therefore, real-time monitoring of abnormal video information can be realized.

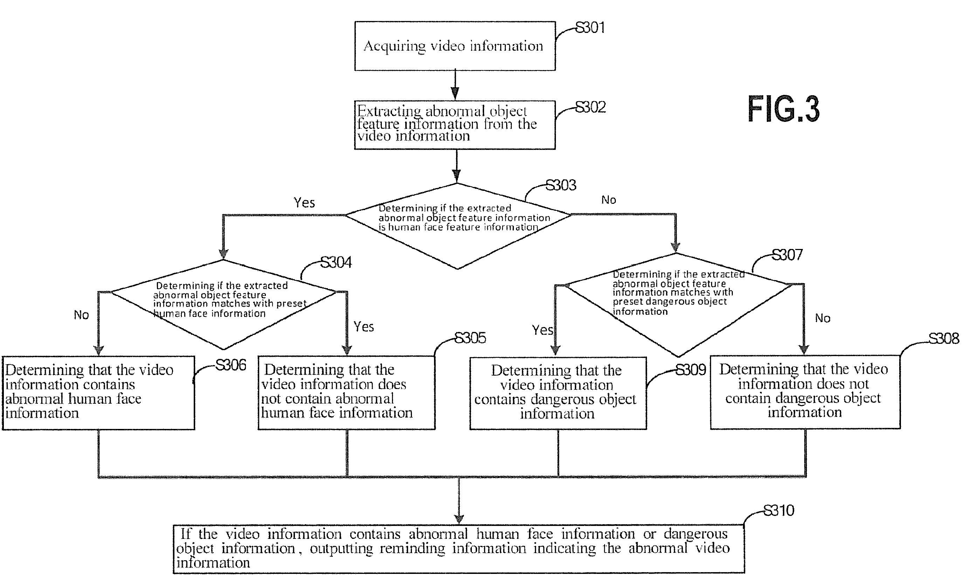

Fig. 3 is a flow chart showing an abnormal video information reminding method according to another exemplary embodiment. The method can be implemented by (or applied in) a device such as at least one of an imaging device (such as the imaging device 110 shown in Figs. 1A-1B), a user terminal (such as the user terminal 120 shown in Figs. 1A-1B) and a wearable device (such as the wearable device 130 shown in Fig. 1B). As shown in Fig. 3, the method may comprise the following steps:
Step S301: acquiring video information. The implementation of step S301 is the same as that of step S201 described with reference to Fig. 2.
Step S302: extracting abnormal object feature information from the video information. For example, extracting abnormal object feature information from the video information may be performed using image feature extracting technologies. In this disclosure, "abnormal object" may include human faces, dangerous objects and other predefined objects not defined as conventional objects by the user.
Step S303: determining if the extracted abnormal object feature information is human face feature information. For example, it may use face recognition technology to determine if the extracted abnormal object feature information is human face feature information.
Step S304: if the extracted abnormal object feature information is human face feature information, determining if the extracted abnormal object feature information matches with preset human face information, wherein the preset human face information represents a safe human face.
Step S305: if the extracted abnormal object feature information matches with the preset human face information, determining that the video information does not contain abnormal human face information.
Step S306: if the extracted abnormal object feature information does not match with the preset human face information, determining that the video information contains abnormal human face information.
   In this embodiment, the preset human face information in step S304 may be preset human face information representing a safe human face, and may be called as "first preset human face information". The first preset human face information may include one or more pieces of human face information representing a safe human face/safe human faces. Thus, that the extracted abnormal object feature information matches with first preset human face information means that the extracted abnormal object feature information matches with one piece of the first preset human face information. In this case, it is determined that the video information does not contain abnormal human face information. In addition, that the extracted abnormal object feature information does not match with first preset human face information means that the extracted abnormal object feature information does not match with any piece of the first preset human face information. In this case, it is determined that the video information contains abnormal human face information.
Step S307: if the extracted abnormal object feature information is not human face feature information, determining if the extracted abnormal object feature information matches with preset dangerous object information.
Step S308: if the extracted abnormal object feature information does not match with the preset dangerous object information, determining that the video information does not contain dangerous object information.
Step S309: if the extracted abnormal object feature information matches with the preset dangerous object information, determining that the video information contains dangerous object information.
   When determining that the extracted abnormal object feature information is not human face feature information in use of human face recognition technology, the extracted abnormal object feature information may be matched with preset dangerous object information to determine if the video information contains dangerous object information.
   The preset dangerous object information may include one or more pieces of dangerous object information representing a dangerous object/dangerous objects. The dangerous object may include a gun, ammunition, a dagger, naked fire and the like. Thus, that the extracted abnormal object feature information matches with preset dangerous object information means that the extracted abnormal object feature information matches with one piece of the preset dangerous object information. In this case, it is determined that the video information contains dangerous object information. In addition, that the extracted abnormal object feature information does not match with preset dangerous object information means that the extracted abnormal object feature information does not match with any piece of the preset dangerous object information. In this case, it is determined that the video information does not contain dangerous object information.
Step S310: if the video information contains abnormal human face information or dangerous object information, outputting reminding information (or notifying information) indicating the abnormal video information.

When outputting the reminding information, the output method may be the same as the output method described above with reference to Fig. 2. For example, the reminding information may be output by the imaging device, user terminal or wearable device itself to remind of abnormal video information. In addition, when the method is applied in an imaging device, the reminding information may be output to the user terminal or the wearable device. Thus, outputting reminding information indicating abnormal video information through a user terminal or a wearable device can be realized, so that the user can remotely monitor abnormal video. In another embodiment, when the method is applied in a user terminal, the reminding information may be output to the wearable device. Thus, outputting reminding information indicating the abnormal video information through a wearable device worn by a user can be realized, so that the user can promptly acquire a reminder (or notification) of abnormal video when not carrying a user terminal.

In a particular embodiment, the method may further comprise: if the video information does not contain abnormal human face information or dangerous object information, not outputting any reminding information.

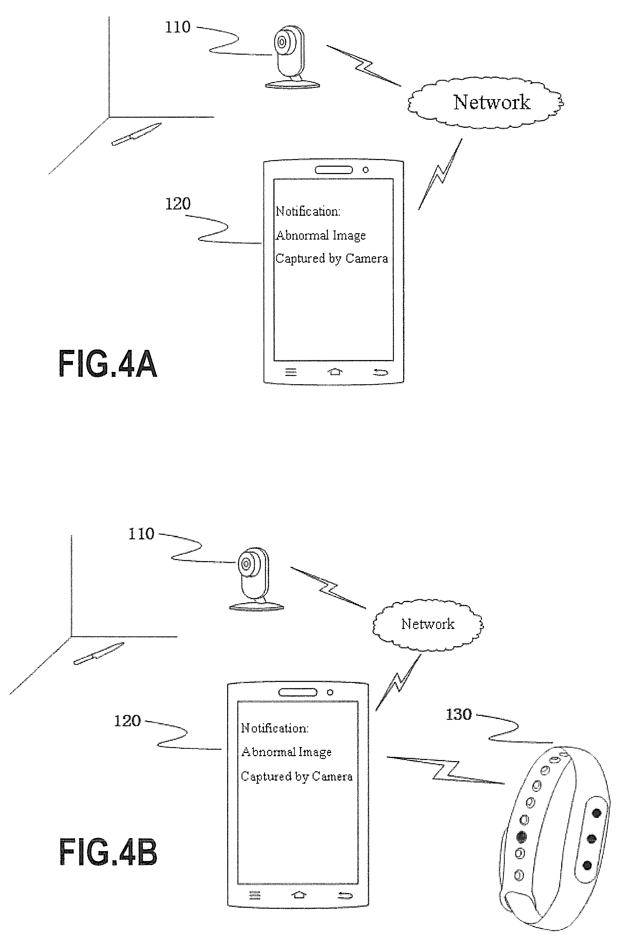

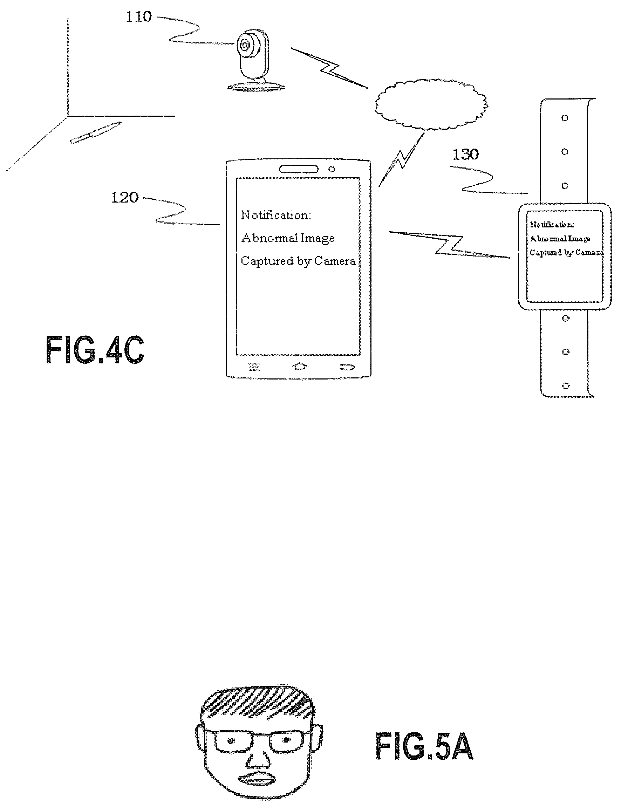

Figs. 4A-4C are schematic drawings showing an scene of using the abnormal video information reminding method shown in Fig. 3. As shown in Fig. 4A, when the video information captured by the imaging device 110 includes a dangerous object---a "dagger", reminding of abnormality is performed through a display screen of the user terminal 120. For example, a notification of "Abnormal Image Captured by Camera" is displayed. Alternatively, as shown by Fig. 4B or 4C, when the video information captured by the imaging device 110 includes a dangerous object---a "dagger", reminding of abnormality is performed through a display screen of the user terminal 120. For example, a notification of "Abnormal Image Captured by Camera" is displayed, and reminding information is output to the wearable device 130 which will remind of abnormality. As shown in Fig. 4B, if the wearable device 130 does not include a display screen, reminding of abnormality may be performed through lighting a lamp. As shown in Fig. 4C, if the wearable device 130 includes a display screen, reminding of abnormality may be performed through a display screen of the wearable device 130. For example, a notification of "Abnormal Image Captured by Camera" is displayed to remind of abnormality.

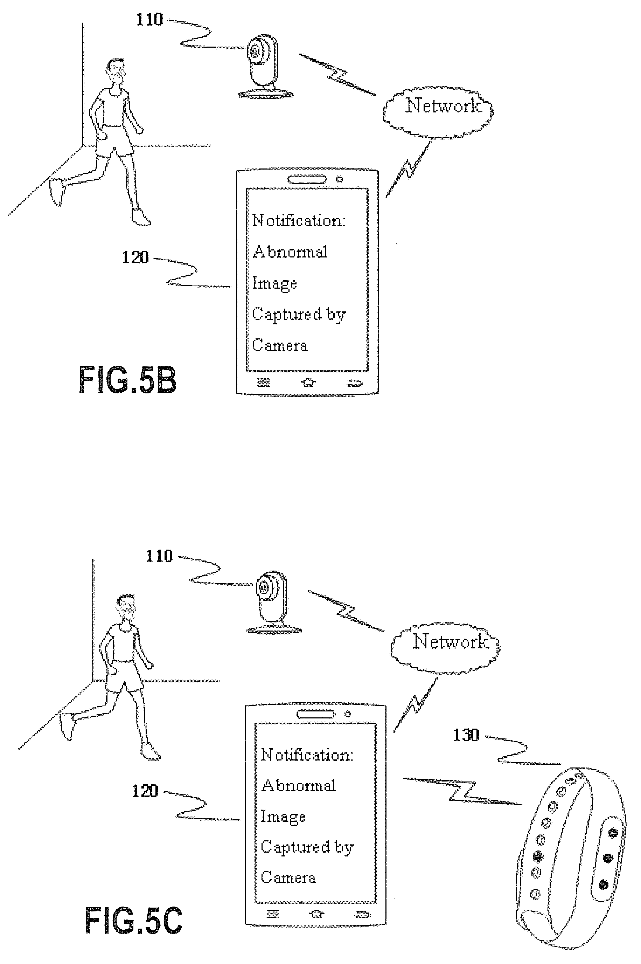

Figs. 5A-5C are schematic drawings showing another scene of using the abnormal video information reminding method shown in Fig. 3. Assume the preset human face information (or the first preset human face information) is shown in Fig. 5A, and represents human face information of a safe human face. Then, according to the abnormal video information reminding method shown in Fig. 3, as shown in Fig. 5B, when the video information captured by the imaging device 110 includes abnormal human face information (or the human face information does not match with the preset human face information shown in Fig. 5A), reminding of abnormality is performed through a display screen of the user terminal 120. For example, a notification of "Abnormal Image Captured by Camera" is displayed. Alternatively, as shown by Fig. 5C, when the video information captured by the imaging device 110 includes abnormal human face information (or the human face information does not match with the preset human face information shown in Fig. 5A), reminding of abnormality is performed through a display screen of the user terminal 120. For example, a notification of "Abnormal Image Captured by Camera" is displayed, and reminding information is output to the wearable device 130 reminding of abnormality (for example, reminding of abnormality may be performed through lighting a lamp).

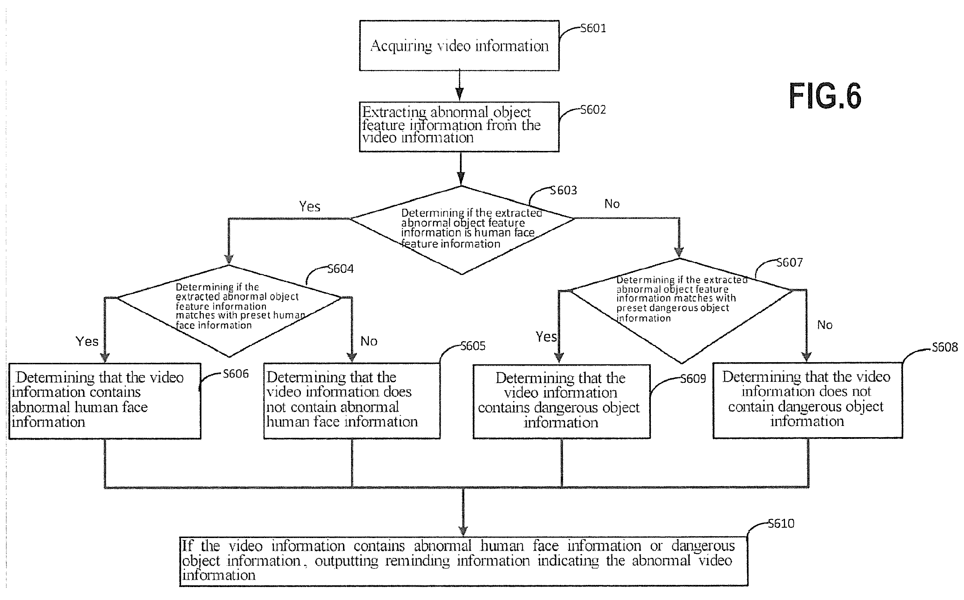

Fig. 6 is a flow chart showing an abnormal video information reminding method according to another exemplary embodiment. The method can be implemented by (or applied in) in device such as at least one of an imaging device (such as the imaging device 110 shown in Figs. 1A-1B), a user terminal (such as the user terminal 120 shown in Figs. 1A-1B) and a wearable device (such as the wearable device 130 shown in Fig. 1B). As shown in Fig. 6, the method may comprise the following steps:
Step S601: acquiring video information. The implementation of step S601 is the same as that of step S201 described with reference to Fig. 2.
Step S602: extracting abnormal object feature information from the video information.
Step S603: determining if the extracted abnormal object feature information is human face feature information. The implementation of steps S602-S603 is the same as that of steps S302-S303 described with reference to Fig. 3.
Step S604: if the extracted abnormal object feature information is human face feature information, determining if the extracted abnormal object feature information matches with preset human face information, wherein the preset human face information represents a dangerous human face.
Step S605: if the extracted abnormal object feature information does not match with the preset human face information, determining that the video information does not contain abnormal human face information.
Step S606: if the extracted abnormal object feature information matches with the preset human face information, determining that the video information contains abnormal human face information.
   In this embodiment, the preset human face information in step S604 may be preset human face information and may represent human face information of a dangerous human face. The preset human face information may be called as "the second preset human face information". The second preset human face information may include human face information representing one or more dangerous human face(s). Thus, that the extracted abnormal object feature information matches with the second preset human face information means that the extracted abnormal object feature information matches with any piece of the second preset human face information. In this case, it is determined that the video information contains abnormal human face information. In addition, that the extracted abnormal object feature information does not match with the second preset human face information means that the extracted abnormal object feature information does not match with any piece of the second preset human face information. In this case, it is determined that the video information does not contain abnormal human face information.
Step S607: if the extracted abnormal object feature information is not human face feature information, determining if the extracted abnormal object feature information matches with preset dangerous object information.
Step S608: if the extracted abnormal object feature information does not match with the preset dangerous object information, determining that the video information does not contain dangerous object information.
Step S609: if the extracted abnormal object feature information matches with the preset dangerous object information, determining that the video information contains dangerous object information. The implementation of steps S607-S609 is the same as that of steps S307-S309 described with reference to Fig. 3.
Step S610: if the video information contains abnormal human face information or dangerous object information, outputting reminding information indicating the abnormal video information.

When outputting the reminding information, the output method may be the same as the output method described above with reference to Fig. 2. For example, the reminding information may be output by the imaging device, user terminal or wearable device itself to remind of abnormal video information. In addition, when the method is applied in an imaging device, the reminding information may be output to the user terminal or the wearable device. Thus, outputting reminding information indicating abnormal video information through a user terminal or a wearable device can be realized, so that the user can remotely monitor abnormal video. In another embodiment, when the method is applied in a user terminal, the reminding information may be output to the wearable device. Thus, outputting reminding information indicating the abnormal video information through a wearable device worn by a user can be realized, so that the user can promptly acquire a reminder of abnormal video when not carrying a user terminal.

Optionally, the method may further comprise: if the video information does not contain abnormal human face information or dangerous object information, not outputting any reminding information.

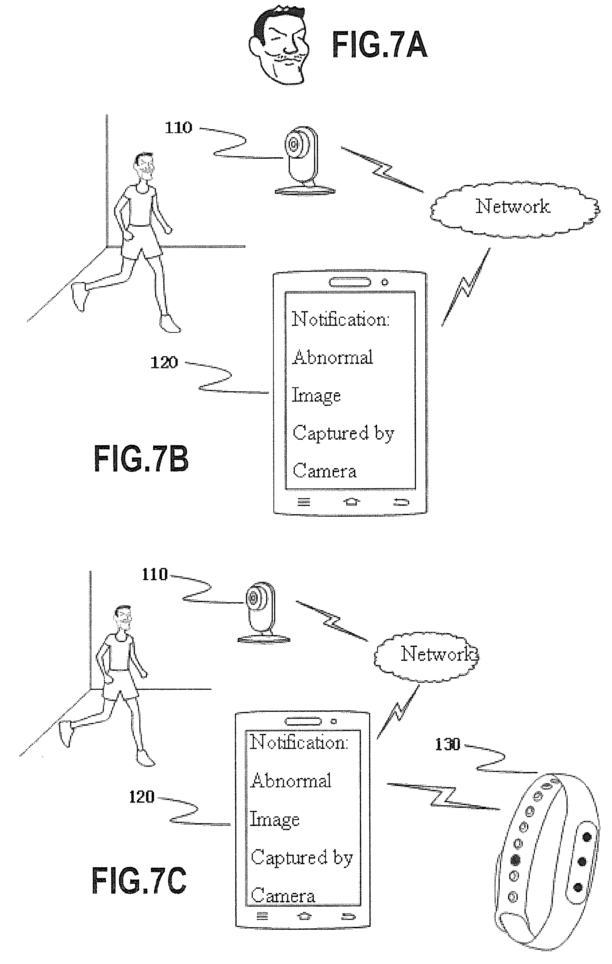

Figs. 7A-7C are schematic drawings showing another scene of using the abnormal video information reminding method shown in Fig. 6. Assume the preset human face information (or the second preset human face information) is shown in Fig. 7A, and represents human face information of a dangerous human face. Then, according to the abnormal video information reminding method shown in Fig. 6, as shown in Fig. 7B, when the video information captured by the imaging device 110 includes abnormal human face information (or the human face information matches with the preset human face information shown in Fig. 7A), reminding of abnormality is performed through a display screen of the user terminal 120. For example, a notification of "Abnormal Image Captured by Camera" is displayed. Alternatively, as shown by Fig. 7C, when the video information captured by the imaging device 110 includes abnormal human face information (or the human face information does not match with the preset human face information shown in Fig. 7A), reminding of abnormality is performed through a display screen of the user terminal 120. For example, a notification of "Abnormal Image Captured by Camera" is displayed, and reminding information is output to the wearable device 130 reminding of abnormality (for example, reminding of abnormality may be performed through lighting a lamp).

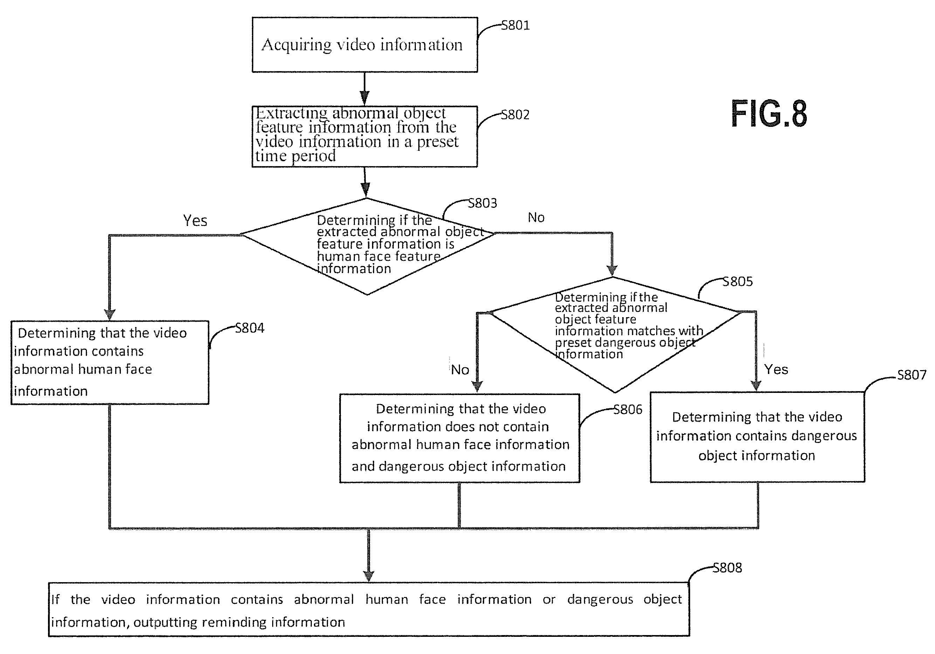

Fig. 8 is a flow chart showing an abnormal video information reminding method according to another exemplary embodiment. The method can be applied in a device such as at least one of an imaging device (such as the imaging device 110 shown in Figs. 1A-1B), a user terminal (such as the user terminal 120 shown in Figs. 1A-1B) and a wearable device (such as the wearable device 130 shown in Fig. 1B). As shown in Fig. 8, the method may comprise the following steps:
Step S801: acquiring video information. The implementation of step S801 is the same as that of step S201 described with reference to Fig. 2.
Step S802: extracting abnormal object feature information from the video information in a preset time period.
   The preset time period may be pre-defined. For example, if the imaging device 110 is installed in at home for capturing video information of the home environment, the preset time period may be defined as a period during which the user is not at home, such as the work time (for example, from 8:00 to 19:00). Then, reminding of abnormal video information may be performed only in that period.
Step S803: determining if the extracted abnormal object feature information is human face feature information. The implementation of step S803 is the same as that of step S303 described with reference to Fig. 3.
Step S804: if the extracted abnormal object feature information is human face feature information, determining that the video information contains abnormal human face information.
Step S805: if the extracted abnormal object feature information is not human face feature information, determining if the extracted abnormal object feature information matches with preset dangerous object information.
Step S806: if the extracted abnormal object feature information does not match with the preset dangerous object information, determining that the video information does not contain abnormal human face information and dangerous object information.
Step S807: if the extracted abnormal object feature information matches with the preset dangerous object information, determining that the video information contains dangerous object information.
Step S808: if the video information contains abnormal human face information or dangerous object information, outputting reminding information indicating the abnormal video information.

When outputting the reminding information, the output method may be the same as the output method described above with reference to Fig. 2. For example, the reminding information (or notifying information) may be output by the imaging device, user terminal or wearable device itself to remind of (or notify) abnormal video information. In addition, when the method is applied in an imaging device, the reminding information may be output to the user terminal or the wearable device. Thus, outputting reminding information indicating abnormal video information through a user terminal or a wearable device can be realized, so that the user can remotely monitor abnormal video. In another embodiment, when the method is applied in a user terminal, the reminding information may be output to the wearable device. Thus, outputting reminding information indicating abnormal video information through a wearable device worn by a user can be realized, so that the user can promptly acquire a reminder (or notification) of abnormal video when not carrying a user terminal.

By using the above method, when the user is not in the monitored area, reminding of (or notifying) abnormality in the monitored area still can be made to the user. If the video screen captured by the imaging device in that period contains abnormal human faces or dangerous objects, it is determined that the video information contains abnormal human face information or dangerous object information, and reminding (or notification) will be performed. When the user is in the monitored area, reminding of abnormality may not be performed. Thus, unnecessary reminding (or notification) can be avoided while reducing power consumption of the devices.

In a particular embodiment, the method may further comprise: if the video information does not contain abnormal human face information or dangerous object information, not outputting any reminding information.

In this disclosure, the preset human face information (including the first preset human face information representing a safe human face and the second preset human face information representing a dangerous human face) or dangerous object information can be acquired through various means.

In one embodiment, the preset human face information or dangerous object information may be acquired from images captured by an imaging device, which may be the imaging device 110 or a camera of the user terminal or the wearable device. For example, for the user terminal, images of human faces or dangerous objects can be captured by a camera included therein; then, the user terminal may extract human face information from the images of human faces captured by the camera as the preset human face information, and extract dangerous object information from the images of dangerous objects captured by the camera.

In another embodiment, the preset human face information or dangerous object information may be acquired from the images of an image library. The image library may be an image library stored in the user terminal, the imaging device or the wearable device, and includes at least one image. Thus, images including the preset human face information or dangerous object information may be selected from the existing images of the image library as candidates, and the preset human face information or dangerous object information may be extracted from the candidate images.

Thus, dangerous objects, safe human faces and dangerous human faces can be defined by users, thereby meeting different application needs of different users.

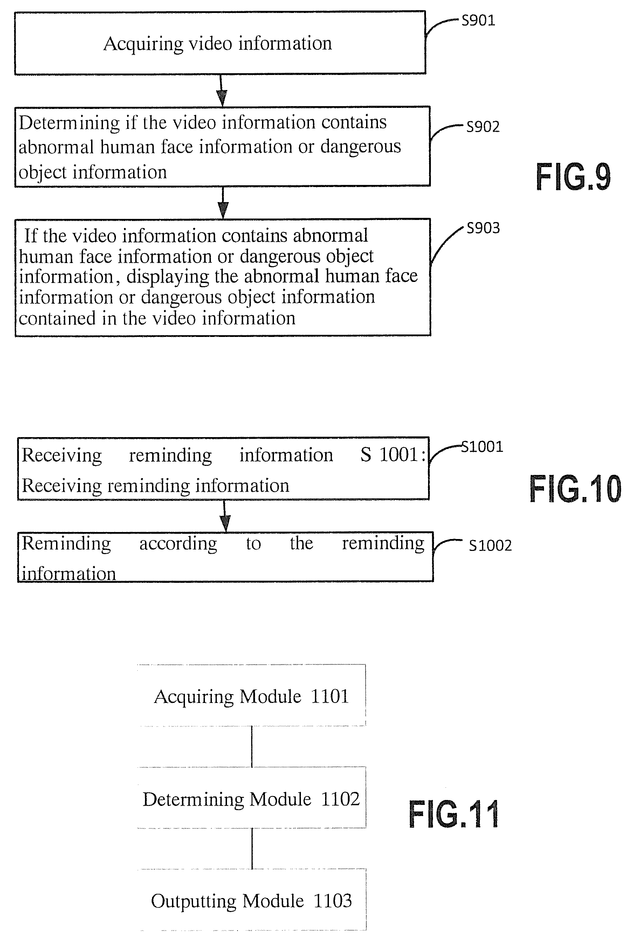

Fig. 9 is a flow chart showing an abnormal video information reminding method according to another exemplary embodiment. The method may be implemented by a device such as any one of the devices mentioned earlier. As shown in Fig. 9, the method may comprise the following steps:
Step S901: acquiring video information;
Step S902: determining if the video information contains abnormal human face information or dangerous object information. The implementation of steps S901-S902 is the same as that of steps S201-S202 described with reference to Fig. 2.
Step S903: if the video information contains abnormal human face information or dangerous object information, displaying the abnormal human face information or dangerous object information contained in the video information.

The method shown in Fig. 9 may be implemented by (or applied in) a device such as a user terminal (such as the user terminal 120 shown in Figs. 1A-1B) or a wearable device (such as the wearable device 130 shown in Fig. 1B). Thus, when there is abnormal video information, abnormal human face information or dangerous object information contained in the current video information can be displayed on a display screen of the user terminal or the wearable device, so that the user can be informed of the abnormal video information and know the conditions of the monitored areas more intuitively and promptly.

Fig. 10 is a flow chart showing an abnormal video information reminding method according to another exemplary embodiment. The method may be implemented by (or applied in) a device such as a user device including a user terminal (such as the user terminal 120 shown in Figs. 1A-1B) and/or a wearable device (such as the wearable device 130 shown in Fig. 1B). As shown in Fig. 10, the method may comprise the following steps:
Step S1001: receiving reminding information;
Step S1002: performing reminding according to the reminding information, wherein the reminding information is acquired by the following method comprising: acquiring video information; determining if the video information contains abnormal human face information or dangerous object information; and if the video information contains abnormal human face information or dangerous object information, outputting reminding information indicating abnormal video information.

Thus, when there is an abnormal or a dangerous object appears on a video screen, reminding (or notification) of abnormality can be performed for the user using the user device, so that the user can know the conditions promptly.

Fig. 11 is a block diagram of an abnormal video information reminding apparatus according to an exemplary embodiment. Referring to Fig. 11, the apparatus may comprise: an acquiring module 1101 configured to acquire video information; a determining module 1102 configured to determine if the video information contains abnormal human face information or dangerous object information; and an outputting module 1103 configured to output reminding information indicating abnormal video information, if the video information contains abnormal human face information or dangerous object information.

In a particular embodiment, the video information is captured by an imaging device in real time.

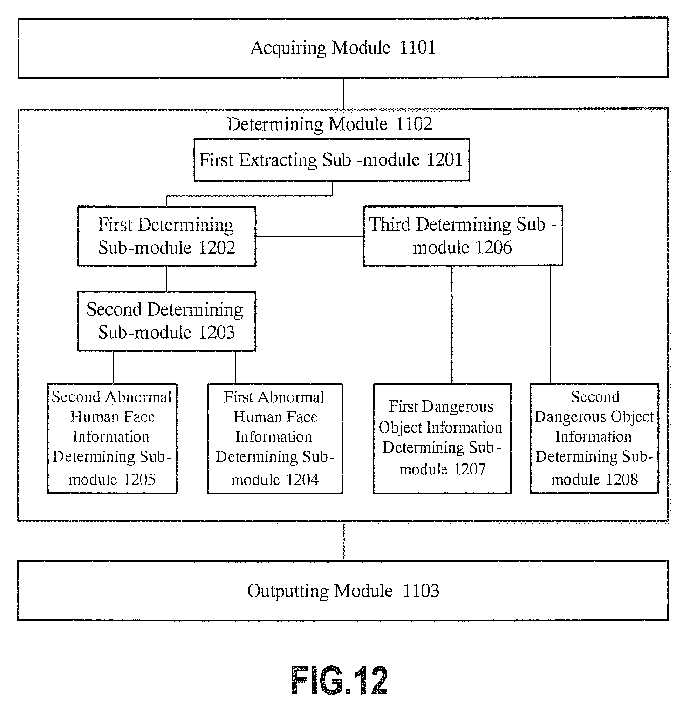

Fig. 12 is a block diagram of an abnormal video information reminding apparatus according to another exemplary embodiment. Referring to Fig. 12, the determining module 1102 may comprise: a first extracting sub-module 1201 configured to extract abnormal object feature information from the video information; a first determining sub-module 1202 configured to determine if the extracted abnormal object feature information is human face feature information; a second determining sub-module 1203 configured to determine if the extracted abnormal object feature information matches with preset human face information when the extracted abnormal object feature information is human face feature information, wherein the preset human face information represents a safe human face; a first abnormal human face information determining sub-module 1204 configured to determine that the video information does not contain abnormal human face information if the extracted abnormal object feature information matches with the preset human face information; a second abnormal human face information determining sub-module 1205 configured to determine that the video information contains abnormal human face information, if the extracted abnormal object feature information does not match with the preset human face information; a third determining sub-module 1206 configured to determine if the extracted abnormal object feature information matches with preset dangerous object information when the extracted abnormal object feature information is not human face feature information; a first dangerous object information determining sub-module 1207 configured to determine that the video information does not contain dangerous object information if the extracted abnormal object feature information does not match with the preset dangerous object information; a second dangerous object information determining sub-module 1208 configured to determine that the video information contains dangerous object information when the extracted abnormal object feature information matches with the preset dangerous object information.

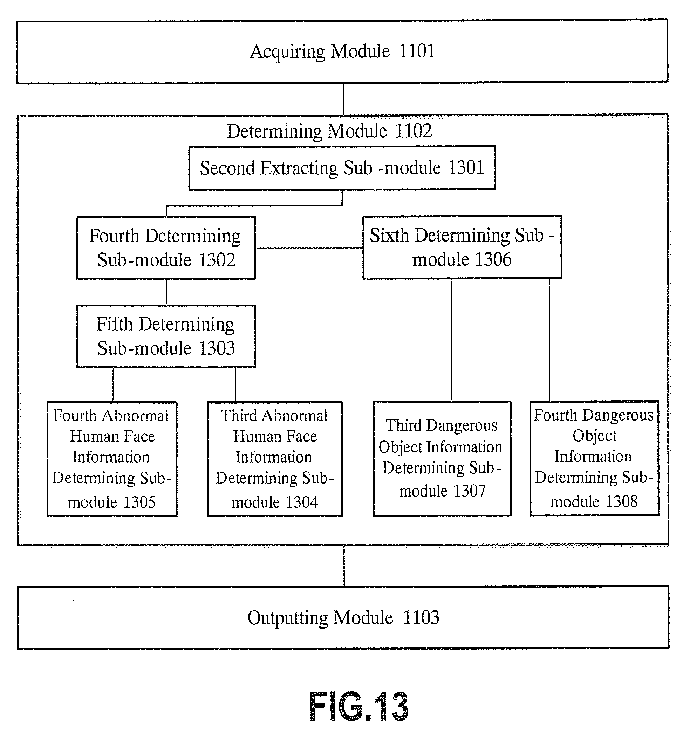

Fig. 13 is a block diagram of an abnormal video information reminding apparatus according to another exemplary embodiment. Referring to Fig. 13, the determining module 1102 may comprise: a second extracting sub-module 1301 configured to extract abnormal object feature information from the video information; a fourth determining sub-module 1302 configured to determine if the extracted abnormal object feature information is human face feature information; a fifth determining sub-module 1303 configured to determine if the extracted abnormal object feature information matches with preset human face information when the extracted abnormal object feature information is human face feature information, wherein the preset human face information represents a dangerous human face; a third abnormal human face information determining sub-module 1304 configured to determine that the video information does not contain abnormal human face information if the extracted abnormal object feature information does not match with the preset human face information; a fourth abnormal human face information determining sub-module 1305 configured to determine that the video information contains abnormal human face information if the extracted abnormal object feature information matches with the preset human face information; a sixth determining sub-module 1306 configured to determine if the extracted abnormal object feature information matches with preset dangerous object information when the extracted abnormal object feature information is not human face feature information; a third dangerous object information determining sub-module 1307 configured to determine that the video information does not contain dangerous object information if the extracted abnormal object feature information does not match with the preset dangerous object information; a fourth dangerous object information determining sub-module 1308 configured to determine that the video information contains dangerous object information if the extracted abnormal object feature information matches with the preset dangerous object information.

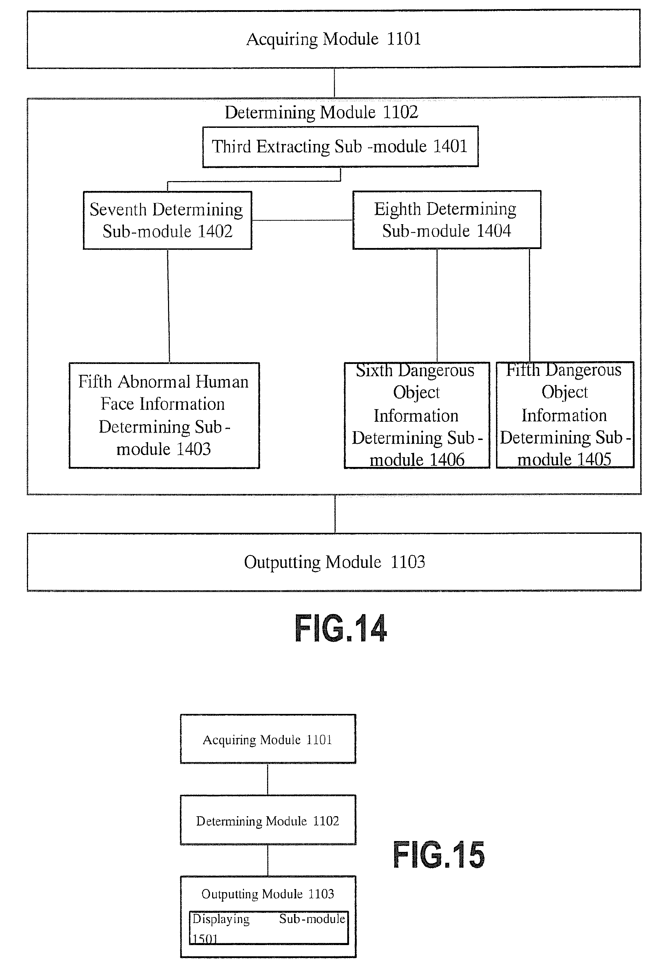

Fig. 14 is a block diagram of an abnormal video information reminding apparatus according to another exemplary embodiment. Referring to Fig. 14, the determining module 1102 may comprise: a third extracting sub-module 1401 configured to extract abnormal object feature information from the video information in a preset time period; a seventh determining sub-module 1402 configured to determine if the extracted abnormal object feature information is human face feature information; a fifth abnormal human face information determining sub-module 1403 configured to determine if the video information contains abnormal human face information, when the extracted abnormal object feature information is human face feature information; an eighth determining sub-module 1404 configured to determine if the extracted abnormal object feature information matches with preset dangerous object information, when the extracted abnormal object feature information is not human face feature information; a fifth dangerous object information determining sub-module 1405 configured to determine that the video information does not contain abnormal human face information and dangerous object information if the extracted abnormal object feature information does not match with the preset dangerous object information; a sixth dangerous object information determining sub-module 1406 configured to determine that the video information contains dangerous object information if the extracted abnormal object feature information matches with the preset dangerous object information.

In a particular embodiment, the preset human face information or the preset dangerous object information is acquired from the images captured by a capturing device, or the preset human face information or the preset dangerous object information is acquired from the images of an image library.

In a particular embodiment, the abnormal video information reminding apparatus shown in Figs. 11-14 may be configured into one of an imaging device (such as the imaging device 110 shown in Figs. 1A-1B), a user terminal (such as the user terminal 120 shown in Figs. 1A-1B) and a wearable device (such as the wearable device 130 shown in Fig. 1B).

Fig. 15 is a block diagram of an abnormal video information reminding apparatus according to another exemplary embodiment. Referring to Fig. 15, the outputting module 1103 may comprise: a displaying sub-module 1501 configured to display the abnormal human face information or dangerous object information contained in the video information.

In a particular embodiment, the abnormal video information reminding apparatus shown in Fig. 15 may be configured into a user device including a user terminal (such as the user terminal 120 shown in Figs. 1A-1B) and/or a wearable device (such as the wearable device 130 shown in Fig. 1B).

With respect to the apparatuses in the above embodiments, the specific manners for performing operations for individual modules therein have been described in detail in the embodiments regarding the related methods, which will not be elaborated herein.

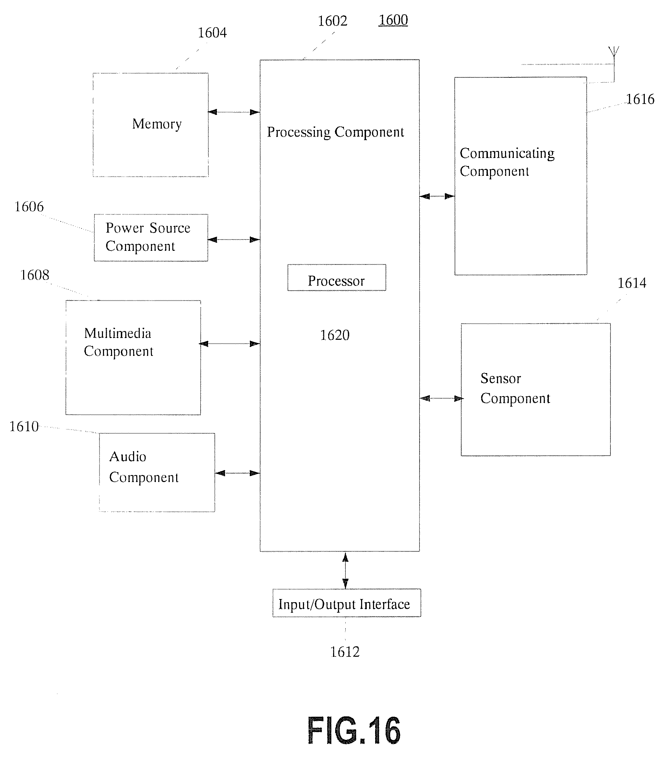

FIG. 16 is a block diagram of an abnormal video information reminding apparatus 1600 according to an exemplary embodiment. For example, the apparatus 1600 may be an imaging device (such as a smart video recorder and a smart camera), a mobile phone, a computer, a digital broadcast terminal, a messaging device, a gaming console, a tablet, a medical device, exercise equipment, a personal digital assistant, a wearable device (such as a smart bracelet and a smart watch) or the like.

Referring to Fig. 16, the apparatus 1600 may include one or more of the following components: a processing component 1602, a memory 1604, a power component 1606, a multimedia component 1608, an audio component 1610, an input/output (I/O) interface 1612, a sensor component 1614, and a communication component 1616.

The processing component 1602 typically controls overall operations of the apparatus 1600, such as the operations associated with display, telephone calls, data communications, camera operations, and recording operations. The processing component 1602 may include one or more processors 1620 to execute instructions to perform all or part of the steps in the above described methods. Moreover, the processing component 1602 may include one or more modules which facilitate the interaction between the processing component 1602 and other components. For instance, the processing component 1602 may include a multimedia module to facilitate the interaction between the multimedia component 1808 and the processing component 1602.

The memory 1604 is configured to store various types of data to support the operation of the apparatus 1600. Examples of such data include instructions for any applications or methods operated on the apparatus 1600, contact data, phonebook data, messages, pictures, video, etc. The memory 1804 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1606 provides power to various components of the apparatus 1600. The power component 1606 may include a power management system, one or more power sources, and any other components associated with the generation, management, and distribution of power in the apparatus 1600.

The multimedia component 1608 includes a screen providing an output interface between the apparatus 1600 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 1808 includes a front camera and/or a rear camera. The front camera and the rear camera may receive an external multimedia datum while the apparatus 1600 is in an operation mode, such as a photographing mode or a video mode. Each of the front camera and the rear camera may be a fixed optical lens system or have focus and optical zoom capability.

The audio component 1610 is configured to output and/or input audio signals. For example, the audio component 1610 includes a microphone ("MIC") configured to receive an external audio signal when the apparatus 1600 is in an operation mode, such as a call mode, a recording mode, and a voice recognition mode. The received audio signal may be further stored in the memory 1604 or transmitted via the communication component 1616. In some embodiments, the audio component 1610 further includes a speaker to output audio signals.

The I/O interface 1612 provides an interface between the processing component 1802 and peripheral interface modules, such as a keyboard, a click wheel, buttons, and the like. The buttons may include, but are not limited to, a home button, a volume button, a starting button, and a locking button.

The sensor component 1614 includes one or more sensors to provide status assessments of various aspects of the apparatus 1600. For instance, the sensor component 1614 may detect an open/closed status of the apparatus 1600, relative positioning of components, e.g., the display and the keypad, of the apparatus 1600, a change in position of the apparatus 1600 or a component of the apparatus 1600, a presence or absence of user contact with the apparatus 1600, an orientation or an acceleration/deceleration of the apparatus 1600, and a change in temperature of the apparatus 1600. The sensor component 1814 may include a proximity sensor configured to detect the presence of nearby objects without any physical contact. The sensor component 1614 may also include a light sensor, such as a CMOS or CCD image sensor, for use in imaging applications. In some embodiments, the sensor component 1614 may also include an accelerometer sensor, a gyroscope sensor, a magnetic sensor, a pressure sensor, or a temperature sensor.

The communication component 1616 is configured to facilitate communication, wired or wirelessly, between the apparatus 1600 and other devices. The apparatus 1600 can access a wireless network based on a communication standard, such as WiFi, 2G, or 3G, or a combination thereof. In one exemplary embodiment, the communication component 1616 receives a broadcast signal or broadcast associated information from an external broadcast management system via a broadcast channel. In one exemplary embodiment, the communication component 1616 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the apparatus 1600 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 1604, executable by the processor 1620 in the apparatus 1600, for performing the above-described methods. For example, the non-transitory computer-readable storage medium may be a ROM, a RAM, a CD-ROM, a magnetic tape, a floppy disc, an optical data storage device, and the like.

Other embodiments of the invention will be apparent to those skilled in the art from consideration of the specification and practice of the invention disclosed here. This application is intended to cover any variations, uses, or adaptations of the invention following the general principles thereof and including such departures from the present disclosure as come within known or customary practice in the art. It is intended that the specification and examples be considered as exemplary only, with a true scope and spirit of the invention being indicated by the following claims.

It will be appreciated that the present invention is not limited to the exact construction that has been described above and illustrated in the accompanying drawings, and that various modifications and changes can be made without departing from the scope thereof. It is intended that the scope of the invention only be limited by the appended claims.

## Claims

1. An abnormal video information reminding method implemented by a device (110; 120; 130), **characterized in that** said method comprises:
acquiring (S201) video information;
determining (S202) if the video information contains abnormal human face information or dangerous object information; and
if the video information contains abnormal human face information or dangerous object information, outputting (S203) reminding information indicating the abnormal video information.

2. The method according to claim 1, **characterized in that** the video information is captured by an imaging device (110) in real time.

3. The method according to claim 1 or 2, **characterized in that** said determining if the video information contains abnormal human face information or dangerous object information comprises:
extracting (S302) abnormal object feature information from the video information;
determining (S303) if the extracted abnormal object feature information is human face feature information;
if the extracted abnormal object feature information is human face feature information, determining (S304) if the extracted abnormal object feature information matches with preset human face information, wherein the preset human face information represents a safe human face;
if the extracted abnormal object feature information matches with the preset human face information, determining (S305) that the video information does not contain abnormal human face information;
if the extracted abnormal object feature information does not match with the preset human face information, determining (S306) that the video information contains abnormal human face information;
if the extracted abnormal object feature information is not human face feature information, determining (S307) if the extracted abnormal object feature information matches with preset dangerous object information;
if the extracted abnormal object feature information does not match with the preset dangerous object information, determining (S308) that the video information does not contain dangerous object information;
if the extracted abnormal object feature information matches with the preset dangerous object information, determining (S309) that the video information contains dangerous object information.

4. The method according to claim 1 or 2, **characterized in that** said determining if the video information contains abnormal human face information or dangerous object information comprises:
extracting (S602) abnormal object feature information from the video information;
determining (S603) if the extracted abnormal object feature information is human face feature information;
if the extracted abnormal object feature information is human face feature information, determining if the extracted abnormal object feature information matches with preset human face information (S604), wherein the preset human face information represents a dangerous human face;
if the extracted abnormal object feature information does not match with the preset human face information, determining (S605) that the video information does not contain abnormal human face information;
if the extracted abnormal object feature information matches with the preset human face information, determining that the video information (S606) contains abnormal human face information;
if the extracted abnormal object feature information is not human face feature information, determining (S607) if the extracted abnormal object feature information matches with preset dangerous object information;
if the extracted abnormal object feature information does not match with the preset dangerous object information, determining (S608) that the video information does not contain dangerous object information;
if the extracted abnormal object feature information matches with the preset dangerous object information, determining (S609) that the video information contains dangerous object information.

5. The method according to claim 1 or 2, **characterized in that** determining if the video information contains abnormal human face information or dangerous object information comprises:
extracting (S802) abnormal object feature information from the video information in a preset time period;
determining (S803) if the extracted abnormal object feature information is human face feature information;
if the extracted abnormal object feature information is human face feature information, determining (S804) if the video information contains abnormal human face information;
if the extracted abnormal object feature information is not human face feature information, determining (S805) if the extracted abnormal object feature information matches with preset dangerous object information;
if the extracted abnormal object feature information does not match with the preset dangerous object information, determining (S806) that the video information does not contain abnormal human face information and dangerous object information;
if the extracted abnormal object feature information matches with the preset dangerous object information, determining (S808) that the video information contains dangerous object information.

6. The method according to any one of claims 3 to 5, **characterized in that** the preset human face information or the preset dangerous object information is acquired from images captured by a capturing device (110), or
the preset human face information or the preset dangerous object information is acquired from images of an image library.

7. The method according to any one of claims 1 to 6, **characterized in that** said outputting reminding information comprises: displaying (S903) the abnormal human face information or dangerous object information contained in the video information.

8. An abnormal video information reminding apparatus (110; 120; 130), **characterized by** comprising:
an acquiring module (1101) configured to acquire video information;
a determining module (1102) configured to determine if the video information contains abnormal human face information or dangerous object information; and
an outputting module (1103) configured to output reminding information indicating abnormal video information, if the video information contains abnormal human face information or dangerous object information.

9. The apparatus according to claim 8, **characterized in that** the video information is captured by an imaging device (110) in real time.

10. The apparatus according to claim 8 or 9, **characterized in that** the determining module comprises:
a first extracting sub-module configured to extract abnormal object feature information from the video information;
a first determining sub-module configured to determine if the extracted abnormal object feature information is human face feature information;
a second determining sub-module configured to determine if the extracted abnormal object feature information matches with preset human face information when the extracted abnormal object feature information is human face feature information, wherein the preset human face information represents a safe human face;
a first abnormal human face information determining sub-module configured to determine that the video information does not contain abnormal human face information if the extracted abnormal object feature information matches with the preset human face information;
a second abnormal human face information determining sub-module configured to determine that the video information contains abnormal human face information, if the extracted abnormal object feature information does not match with the preset human face information;
a third determining sub-module configured to determine if the extracted abnormal object feature information matches with preset dangerous object information when the extracted abnormal object feature information is not human face feature information;
a first dangerous object information determining sub-module configured to determine that the video information does not contain dangerous object information if the extracted abnormal object feature information does not match with the preset dangerous object information;
a second dangerous object information determining sub-module configured to determine that the video information contains dangerous object information when the extracted abnormal object feature information matches with the preset dangerous object information.

11. The apparatus according to claim 8 or 9, **characterized in that** the determining module comprises:
a second extracting sub-module configured to extract abnormal object feature information from the video information;
a fourth determining sub-module configured to determine if the extracted abnormal object feature information is human face feature information;
a fifth determining sub-module configured to determine if the extracted abnormal object feature information matches with preset human face information when the extracted abnormal object feature information is human face feature information, wherein the preset human face information represents a dangerous human face;
a third abnormal human face information determining sub-module configured to determine that the video information does not contain abnormal human face information if the extracted abnormal object feature information does not match with the preset human face information;
a fourth abnormal human face information determining sub-module configured to determine that the video information contains abnormal human face information if the extracted abnormal object feature information matches with the preset human face information;
a sixth determining sub-module configured to determine if the extracted abnormal object feature information matches with preset dangerous object information when the extracted abnormal object feature information is not human face feature information;
a third dangerous object information determining sub-module configured to determine that the video information does not contain dangerous object information if the extracted abnormal object feature information does not match with the preset dangerous object information;
a fourth dangerous object information determining sub-module configured to determine that the video information contains dangerous object information if the extracted abnormal object feature information matches with the preset dangerous object information.

12. The apparatus according to claim 8 or 9, **characterized in that** the determining module comprises:
a third extracting sub-module configured to extract abnormal object feature information from the video information in a preset time period;
a seventh determining sub-module configured to determine if the extracted abnormal object feature information is human face feature information;
a fifth abnormal human face information determining sub-module configured to determine if the video information contains abnormal human face information, when the extracted abnormal object feature information is human face feature information;
an eighth determining sub-module configured to determine if the extracted abnormal object feature information matches with preset dangerous object information, when the extracted abnormal object feature information is not human face feature information;
a fifth dangerous object information determining sub-module configured to determine that the video information does not contain abnormal human face information and dangerous object information if the extracted abnormal object feature information does not match with the preset dangerous object information;
a sixth dangerous object information determining sub-module configured to determine that the video information contains dangerous object information if the extracted abnormal object feature information matches with the preset dangerous object information.

13. The apparatus according to any one of claims 10 to 12, **characterized in that** the determining module (1102) is configured to acquire the preset human face information or the preset dangerous object information from images captured by a capturing device (110), or
the determining module (1102) is configured to acquire the preset human face information or the preset dangerous object information from images of an image library.

14. A computer program including instructions for executing the steps of an abnormal video information reminding method according to any one of claims 1 to 7 when said program is executed by a computer.

15. A recording medium readable by a computer and having recorded thereon a computer program including instructions for executing the steps of an abnormal video information reminding method according to any one of claims 1 to 7.
